# EUROPEAN PATENT APPLICATION

(11) **EP 4 556 277 A1**
(43) Date of publication of application: **21.05.2025**
(21) Application number: 23275161.0
(22) Date of filing: 14.11.2023
(51) Int. Cl.: B60K 15/03, B60K 15/077

(54) **A FLUID-STORAGE TANK**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

A fluid-storage tank comprising a fluid storage volume for storing fluid therein and a fluid storage volume adjuster configured to adjustably vary the fluid storage volume of the fluid-storage tank according to an operating condition of the fluid-storage tank.

## Description

### FIELD

The present invention relates to a fluid-storage tank.

### BACKGROUND

Slosh is a problem for fluid-storage tanks, particularly those in vehicles where fluid, such as fuel, sloshing within the tank can affect vehicle performance. Slosh can be mitigated, at least to some degree, by providing baffles within the fluid tank. In some arrangements, the fluid first flows past the baffles, or flows through one or more restrictive orifices provided in each baffle, when sloshing from one part of the tank to another. Baffles therefore tend to provide a damping effect on the fluid flow but baffles are unable to eliminate the sloshing effect entirely.

In some vehicles, the sloshing effect can change the vehicle's centre of gravity significantly enough to alter the performance of the vehicle, for example during deceleration or acceleration events, such as turns.

With regard to ground vehicles, slosh can significantly increase braking distance in part because, when braking, fluid sloshing within the vehicle's fuel tank can cause a significant longitudinal weight transfer across the tank resulting in an increase in the weight over the front axle and a corresponding decrease in the weight over the rear axle. As will be appreciated by a person skilled in the art, while the total weight of the vehicle remains constant, this asymmetric loading reduces the total frictional force available for braking due to the way in which the tyre-road friction coefficient non-linearly varies with reaction force. A similar weight transfer across the roll axis occurs during turns which, in the same way, reduces the total frictional force available to the vehicle for turning which can result in an oversteer or understeer condition of the vehicle. Roll axis instability can also occur during braking.

Slosh also increases braking distance because of the momentum of the fluid moving to the front of the vehicle during braking and this causes an additional force to be applied in the opposite direction to the braking force, causing a reduction in the rate of deceleration of the vehicle.

Slosh is also a problem for aircraft as acceleration forces (e.g. resulting from manoeuvres), may cause the fuel to slosh within the fuel tank and this sloshing can cause a significant change to the centre of gravity of the aircraft. This change in the centre of gravity can change the attitude and handling characteristics of the aircraft and may in certain circumstances cause the aircraft to stall if not accounted for by trimming the control surfaces.

Slosh is also a problem for vessels, including cruise ships and oil tankers. In addition to employing fuel tanks, in some cases vessels may also employ fluid ballast tanks which can also be susceptible to slosh. Furthermore, in the same way as for other vehicles, slosh can cause a change in the attitude of a vessel during acceleration or deceleration events. For example, slosh can cause the vessel to roll excessively during a turn which can increase the risk of the vessel capsizing.

There therefore exists a need for a fluid-storage tank having an improved ability to reduce weight transfer across the tank resulting from slosh.

### SUMMARY

According to a first aspect of the present invention, there is provided a fluid-storage tank comprising:
a fluid storage volume for storing fluid therein; and
a fluid storage volume adjuster configured to adjustably vary the fluid storage volume of the fluid-storage tank according to an operating condition of the fluid-storage tank.

Optionally, the operating condition is one or more of the volume of fluid within the fluid-storage volume, the flow rate of fluid entering or exiting the fluid-storage tank, and/or a pressure or temperature for example within the fluid-storage tank, for example a temperature and/or pressure of the fluid within the fluid-storage tank. Optionally, the fluid storage volume adjuster is configured to dynamically vary the fluid storage volume, for example according to an operating condition of the fluid-storage tank. Optionally the fluid-storage tank is a gas-storage tank or a liquid-storage tank, such as a fuel-storage tank or a water storage tank. Optionally, the fluid storage volume adjuster defines a surface of the fluid storage volume. Optionally, fluid storage volume adjuster may be configured to adjustably vary the fluid storage volume of the fluid-storage tank according to (e.g. to compensate for) a change in volume of fluid within the fluid-storage tank.

Optionally, the fluid storage volume adjuster comprises an adjustable volume-occupier, optionally arranged within the fluid storage volume (or fluid-storage tank), and optionally having an adjustable (e.g. dynamically adjustable) volume so as to (e.g. dynamically) adjustably vary the fluid storage volume within the fluid-storage tank.

Optionally, the adjustable volume-occupier comprises an inflatable bladder. Optionally, the inflatable bladder is elastically expandable or inflatable, or the inflatable bladder is resiliently (i.e. substantially non-elastically) inflatable.

Optionally, the inflatable bladder is configured to correspond to, or conform to, at least one internal wall of the fluid-storage tank when the inflatable bladder is in an inflated configuration thereof. Optionally, the at least one wall of the fluid-storage tank defines the fluid storage volume. Optionally, the inflatable bladder comprises nitrile rubber, a fluroelastomer, ethylene propylene diene monomer, polyurethane, or butyl rubber.

Optionally, the fluid-storage tank comprises at least one baffle arranged within the fluid storage volume for reducing fluid slosh within the fluid-storage tank.

Optionally, the inflatable bladder is configured such that, in an inflated configuration thereof, the inflatable bladder at least partially occupies a space defined at least in part by the at least one baffle.

Optionally, the inflatable bladder is configured such that, in an inflated configuration thereof, the inflatable bladder at least partially occupies a space defined at least in part by the at least one baffle and an internal wall of the fluid-storage tank defining the fluid storage volume.

Optionally, the adjustable volume-occupier comprises a plurality of inflatable bladders wherein each of the plurality of inflatable bladders is configured such that, in an inflated configuration thereof, each inflatable bladder at least partially occupies a space defined at least in part by at least one baffle of the plurality of baffles.

Optionally, the fluid-storage tank comprises a plurality of baffles arranged within the fluid storage volume for reducing fluid slosh within the fluid-storage tank, the plurality of baffles defining at least one pair of opposed baffles, each pair of opposed baffles defining a respective inter-baffle space.

Optionally, the inflatable bladder is configured such that, in an inflated configuration thereof, the inflatable bladder at least partially occupies at least one inter-baffle space. Optionally, the inflatable bladder is configured to at least partially occupy a plurality of inter-baffle spaces.

Optionally, the plurality of inflatable bladders is configured such that, in an inflated configuration thereof, each inflatable bladder of the plurality of inflatable bladders at least partially occupies at least one respective inter-baffle space.

Optionally, the inflatable bladder comprises a fluid inlet for inflating the inflatable bladder, wherein the fluid inlet is in fluid communication with a pump configured to supply the fluid inlet with fluid. Optionally, each inflatable bladder of the plurality of inflatable bladders comprises a respective fluid inlet, or a common fluid inlet, for inflating the plurality of inflatable bladders. Optionally, the fluid inlet is in fluid communication with a pump configured to supply the fluid inlet with fluid for inflating the inflatable bladder. The fluid could be a liquid or a gas such as air.

Optionally, the fluid-storage tank comprises a fluid outlet pipe for removing fluid within the fluid storage volume from the fluid-storage tank and wherein the inflatable bladder comprises an aperture passing entirely through the inflatable bladder, the aperture configured to receive the fluid outlet pipe therein.

Optionally, the fluid-storage tank comprises a controller configured to adjustably vary the fluid storage volume adjuster according to an operating condition of the fluid-storage tank. Optionally, the operating condition of the fluid-storage tank is one or more of the volume of fluid within the fluid-storage tank (for example within the fluid storage volume), the flow rate of fluid entering or exiting the fluid-storage tank, and/or a pressure or temperature for example within the fluid-storage tank, for example a temperature and/or pressure of the fluid within the fluid-storage tank.

Optionally, the controller is configured to (e.g. dynamically) adjustably vary the adjustable volume of the adjustable volume-occupier according to an operating condition of the fluid-storage tank. Optionally, the operating condition of the fluid-storage tank is one or more of the volume of fluid within the fluid-storage tank (for example within the fluid storage volume), the flow rate of fluid entering or exiting the fluid-storage tank, and/or a pressure or temperature for example within the fluid-storage tank, for example a temperature and/or pressure of the fluid within the fluid-storage tank.

According to a second aspect of the present invention, there is provided a vehicle comprising the fluid-storage tank according to the first aspect. The adjustable volume-occupier may comprise an inflatable bladder, which may comprise a fluid inlet for inflating the inflatable bladder, wherein the fluid inlet is configured to be in fluid communication with a bleed air source, e.g. of an engine of the vehicle, or with a ram-air intake of the vehicle.

According to a third aspect of the present invention, there is provided a method of (e.g. dynamically) adjustably varying the fluid storage volume of a fluid-storage tank, the method comprising:
adjustably varying the fluid storage volume of the fluid-storage tank according to an operating condition of the fluid-storage tank.

Optionally, the operating condition is one or more of the volume of fluid within the fluid-storage tank (for example, within the fluid-storage volume), the flow rate of fluid entering or exiting the fluid-storage tank, and/or a pressure or temperature for example within the fluid-storage tank, for example a temperature and/or pressure of the fluid within the fluid-storage tank.

### BRIEF DESCRIPTION OF THE FIGURES

Embodiments of the invention will now be described by way of example only with reference to the Figures, in which:
Fig. 1 shows a schematic cross-sectional view of a fluid-storage tank according to a first embodiment the present invention;
Fig. 2 shows a schematic cross-sectional view of a fluid-storage tank according to a second embodiment of the present invention;
Fig. 3 shows a schematic cross-sectional view of a fluid-storage tank according to a third embodiment of the present invention; and
Fig. 4 shows a schematic cross-sectional view of a fluid-storage tank according to a fourth embodiment of the present invention.

### DETAILED DESCRIPTION

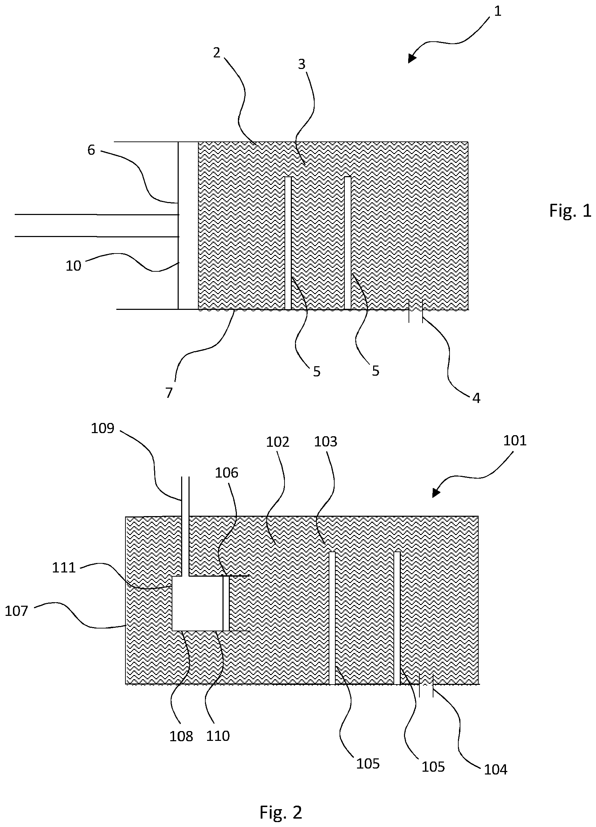

Fig. 1 shows a fluid-storage tank 1. In this embodiment and in the other embodiments of this disclosure, the fluid-storage tank may be a fuel-storage tank. The fluid-storage tank may be a liquid storage tank.

As shown, the fluid-storage tank 1 comprises a fluid storage volume 2 for storing fluid 3, for example fuel. In the Figures, the fluid 3 is shown as substantially filling the fluid storage volume 2, but this is not essential. The fluid-storage tank 1 comprises a fluid outlet 4 fluidly coupled to the fluid storage volume 2 for removing fluid 3 from the tank 1.

Baffles 5 may be provided within the tank 1. These are also not essential but may be desirable as an additional measure to reduce slosh in addition to the measures described below and may also be used as a back-up slosh reduction system.

As shown, the fluid-storage tank 1 includes a fluid storage volume adjuster 10 for adjustably varying the fluid storage volume 2. In the embodiment of Fig. 1, the fluid storage volume adjuster 10 comprises a piston 6. The piston 6 partially defines the fluid storage volume 2, the remainder of the fluid storage volume 2 being defined by the internal walls 7 of the tank 1. The piston 6 is moveable so as to adjust (e.g. increase or decrease) the fluid-storage volume 2. As fluid 3 flows out of the fluid outlet 4, the piston 6 may be configured to move so as to compensate for the removed volume of fluid 3 by correspondingly reducing the fluid storage volume 2 (for example, such that the fluid occupies substantially the entirety of the fluid storage volume such there is no void space within the fluid storage volume available for the fluid to slosh within). Thus, the fluid storage volume adjuster 10 is configured to vary or adjust the fluid storage volume 2 according to the volume of fluid within the tank 1, e.g. according to a change in the volume of the fluid 3. The piston 6 may be coupled to any suitable means for driving the piston 6, for example a pneumatic or hydraulic pump or to a motor as will be readily understood by a person skilled in the art. Alternatively, in some embodiments the piston may move automatically by suction when fluid within the tank 1 is pumped out.

In this embodiment, and in the other embodiments of the invention disclosed herein, the fluid storage volume adjuster 10 may dynamically vary the fluid storage volume 2. For example, a controller (not shown) may be provided to actively control the fluid storage volume adjuster 10. Alternatively, the fluid storage volume adjuster 10 may passively but dynamically vary the fluid storage volume 2. For example, the piston 6 may be driven by a pressure or by a bias, such as a spring, which causes the piston 6 to move so as to reduce the available fluid storage volume 2 in response to a reduction of the volume of fluid 3 within the tank 1 caused by fluid 3 flowing out of the fluid outlet 4.

In some embodiments, the fluid storage volume adjuster 10 may be configured to adjustably vary the fluid storage volume 2 according to a pressure or temperature, for example an internal pressure or temperature of the tank 1 (for example, of fluid 3 within the tank 1), according to the volume or mass of fluid 3 within the tank 1, or according to the volume or flow-rate of fluid 3 flowing through fluid outlet 4. By compensating for the changing volume of the fluid 3, the slosh performance is improved as the available space for the fluid 3 to slosh within the tank 1 is reduced and so the centre of gravity (for example an instantaneous centre of gravity) of tank 1 is more consistent, or at least more readily determined.

Turning now to Fig. 2, a second embodiment of the present invention is shown. Features of this second embodiment which correspond to features of the first embodiment are provided with a corresponding reference number but increased by 100.

Like the first embodiment, the second embodiment also comprises a fluid-storage tank 101. The fluid-storage tank 101 comprises a fluid storage volume 102 for storing fluid 103 therein, for example fuel. In the Figures, the fluid 103 is shown as substantially filling the fluid storage volume 102, but this is not essential to the invention. The fluid-storage tank 101 comprises a fluid outlet 104 fluidly coupled to the fluid storage volume 102 for removing fluid 103 from the tank 101.

Baffles 5 may be provided within the tank 101. These are also not essential but may be desirable as an additional measure to reduce slosh in addition to the measures described below.

A fluid storage volume adjuster 110 for adjustably varying the fluid storage volume 102 is provided. In the embodiment of Fig. 2, the fluid storage volume adjuster comprises an adjustable volume-occupier 111 having an adjustable volume. The volume-occupier 111 is arranged within the tank 101 so as to occupy a variable portion of the internal fluid storage volume 102. In the second embodiment, the adjustable volume-occupier 111 comprises a piston 106 which partially defines the fluid storage volume 102. The fluid storage volume adjuster 110 is arranged within the tank 101, i.e. within a volume defined by the internal walls 107 of the tank 101. The fluid storage volume adjuster 110 defines a surface of the fluid storage volume 102. The piston 106 is moveable within a cylinder 108 also arranged within the tank 101. The cylinder 108 is fluidly coupled to a hydraulic supply 109 such that the piston 106 is drivable so as to adjustably vary the fluid storage volume 102, for example as fluid 103 exits the fluid outlet 104. In this embodiment, and in the other embodiments of the invention disclosed herein, the fluid storage volume adjuster 110 may not be configured to adjustably vary the fluid storage volume 102 according to only the volume of fluid leaving the tank 101 but it may additionally or alternatively also may be configured to adjustably vary the fluid storage volume 102 according to any other suitable operating condition of the tank, for example according to a temperature, for example according to a temperature within the tank 101, such as according to the temperature of the fluid 102 within the fluid storage volume 102.

As will be appreciated, by moving the piston 106, the volume of the adjustable volume-occupier 111 itself is adjustable such that the available fluid storage volume 102 within the tank 101 may be adjustably varied.

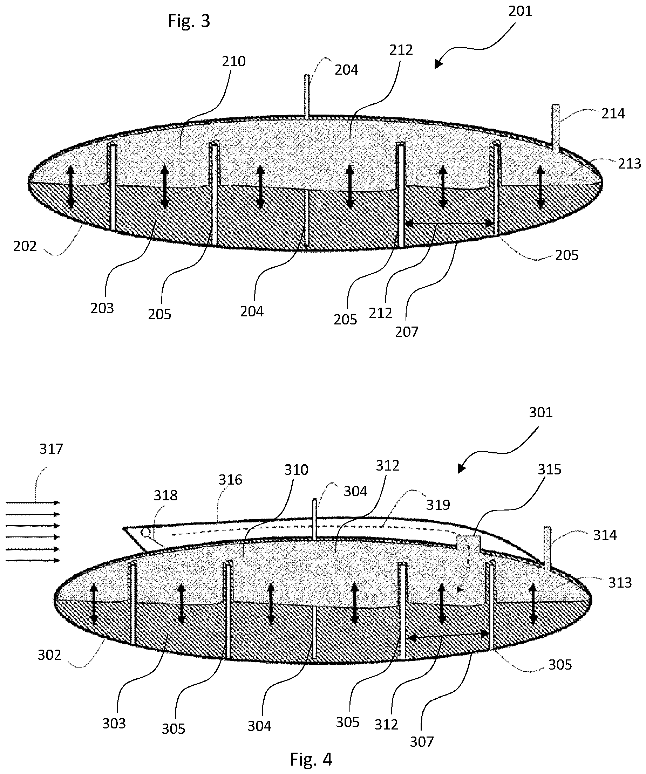

Turning now to Fig. 3, a third embodiment of the present invention is shown. Features of this third embodiment which correspond to features of the first embodiment are provided with a corresponding reference number but increased by 200.

Like the first and second embodiments, the third embodiment comprises a fluid-storage tank 201. The fluid-storage tank 201 comprises, or defines, a fluid storage volume 202 for storing fluid 203 therein, for example a fluid such as fuel. In the Figures, the fluid 203 is shown as substantially filling the fluid storage volume 202, but this is not essential to the invention. The fluid-storage tank 201 comprises a fluid outlet 204 fluidly coupled to the fluid storage volume 202 for removing fluid 203 from the tank 201.

Baffles 205 may be provided within the tank 201. These are also not essential but may be desirable as an additional measure to reduce slosh in addition to the measures described below

Although several baffles 205 are shown, any suitable number of baffles 205 may be provided, including a single baffle. Where two or more baffles 205 are provided, a pair of baffles 205 may together define an inter-baffle space 212 therebetween, for example wherein the baffles 205 of the pair of baffles are spaced apart and opposed to each other, as shown in the Figures.

A fluid storage volume adjuster 210 for adjustably varying the fluid storage volume 202 is provided. In the embodiment of Fig. 3, the fluid storage volume adjuster 210 comprises an adjustable volume-occupier 211 having an adjustable volume. The volume-occupier 211 is arranged within the tank 201 so as to occupy a variable portion of the fluid storage volume 202. In the third embodiment, the volume-occupier 211 comprises an inflatable bladder 213. The inflatable bladder 203 has a bladder fluid inlet 214 in fluid communication with the inflatable bladder 213 for inflating and/or deflating the inflatable bladder 213 with fluid. The inflatable bladder may be inflated with a liquid or a gas such as air. The inflatable bladder 213 may in some embodiments be elastically inflatable or it may in other embodiments inflate substantially without elastic deformation of its surface. The inflatable bladder 213 may for example comprise nitrile rubber, a fluroelastomer, ethylene propylene diene monomer, polyurethane, or butyl rubber.

In the third embodiment, the inflatable bladder 213 may be toroidal in shape in that it may comprise an aperture passing entirely through the inflatable bladder 213, for example through opposing surfaces of the inflatable bladder 213. The tank fluid outlet 204 may comprise a pipe which may be received within, and may in some embodiments pass through, the aperture.

The inflatable bladder 213 is configured to correspond to at least a portion of the internal shape of the tank 201 defined by the internal walls 207 of the tank 201. The inflatable bladder 213 itself may be shaped so as to correspond to the shape of at least one internal wall 207 of the tank 201 when inflated, or the inflatable bladder 213 may for example be elastically deformable such that, when inflated, it conforms to the shape of at least one internal wall 207 of the tank 201.

In this embodiment, the inflatable bladder 213 is configured such that, in an inflated configuration thereof, the inflatable bladder 213 at least partially occupies a space defined at least in part by a baffle 205. Specifically, the inflatable bladder 213 at least partially occupies the inter-baffle space 212 of each pair of baffles 205. Embodiments wherein not all of the inter-baffle spaces 211 are at least partially occupied by the inflatable bladder 213 but wherein the inflatable bladder 213 at least partially occupies only a subset of the total number of inter-baffles spaces 211 are also envisaged. The inflatable bladder 213 also at least partially occupies a space defined between one of the outer baffles 205 and an internal wall 207 of the tank 201. As the inflatable bladder 213 inflates, it conforms to a surface of the baffles 205 and may expand along them such that a portion or length of the baffles 205 are encompassed by the inflatable bladder 213 as it inflates.

While in the embodiment shown, the adjustable volume-occupier 211 comprises a single inflatable bladder 213, other embodiments are envisaged in which the adjustable volume-occupier 211 comprises a plurality of inflatable bladders 213 wherein the plurality of inflatable bladders 213 is configured such that, in an inflated configuration thereof, each inflatable bladder 213 at least partially occupies a space defined at least in part by at least one baffle 205 of the plurality of baffles 205. In some embodiments, each inflatable bladder 213 may be provided within, or may be configured to extend within, a respective inter-baffle space 212.

The bladder fluid inlet 214 may be in fluid communication with any suitable fluid source and, in the embodiment of Fig. 3, a pump (not shown) supplies fluid to the bladder fluid inlet 214 for inflating the inflatable bladder 213. In other embodiments, the bladder fluid inlet 214 may instead be in fluid communication with a source of bleed air for example engine bleed air, for example from an engine of a vehicle comprising the tank 201.

Turning now to Fig. 4, an alternative or additional means for supplying the inflatable bladder 313 with fluid is shown in a fourth embodiment of the present invention. Features of this fourth embodiment which correspond to features of the first embodiment are provided with a corresponding reference number but increased by 300.

The fourth embodiment of Fig. 4 is the same as the third embodiment of Fig. 3 except that the inflatable bladder 313 comprises an additional or alternative bladder fluid inlet 315 (but of course a separate inlet is not essential and inlet 314 may be combined with inlet 315 to form a common inlet). The bladder fluid inlet 315 is in fluid communication with a ram air intake 316, for example a ram air intake 316 of a vehicle (such as an aircraft) comprising the tank 301. As such, the ram air intake 316 is configured to receive ram air flow 317. The ram air intake 316 may comprise a valve assembly for controlling the flow of ram air to the inflatable bladder 313 for inflating the inflatable bladder 313. The valve assembly in some embodiments may comprise a uni-directional valve or bi-directional valve, although in the embodiment shown the valve assembly comprises a pivotable flap 318 arranged along a ram air flow path 319 passing through the ram air intake 316.

It should also be noted that in each of the embodiments of Fig. 3 and 4 discussed above, the tank 201, 301 may also comprise means for deflating the inflatable bladder 213, 313, which is particularly advantageous for when the tank is refilled or when certain operating conditions, for example the temperature within the tank, cause the fluid 3, 103, 203, 301 within the tank to expand. Such a means may comprise for example a vent or a pump fluidly coupled to the bladder fluid inlet 214, 314 so as to deflate the inflatable bladder 213, 313.

In various embodiments, a controller may be provided which may be configured to adjustably vary the fluid storage volume adjuster 10, 110, 210, 310 for adjustably varying the fluid storage volume 3, 103, 203, 303, according to any suitable parameter, for example according to an operating condition of the tank 1, 101, 201, 301 such as any such operating condition referred to herein. In some embodiments, the controller may be configured to adjustably vary an adjustable volume of the adjustable volume occupier 111, 211, 311, for example according to an operating condition of the tank 1, 101, 201, 301.

This specification also provides a vehicle comprising the fluid storage tank described herein. The vehicle may for example be an aircraft, a ground vehicle such as a lorry, or a ship or other vessel (such as a submarine). In some embodiments the fluid storage tank comprises the fuel tank of the vehicle. In some embodiments, the vehicle is a tanker and the fluid storage tank is a tank of the tanker.

It is envisaged that the person skilled in the art may make various changes to the embodiments specifically described above without departing from the scope of the invention.

## Claims

1. A fluid-storage tank comprising:
a fluid storage volume for storing fluid therein; and
a fluid storage volume adjuster configured to adjustably vary the fluid storage volume of the fluid-storage tank according to an operating condition of the fluid-storage tank.

2. The fluid-storage tank according to claim 1, wherein the fluid storage volume adjuster comprises an adjustable volume-occupier, wherein the adjustable volume-occupier has an adjustable volume so as to adjustably vary the fluid storage volume within the fluid-storage tank.

3. The fluid-storage tank according to claim 2, wherein the adjustable volume-occupier comprises an inflatable bladder.

4. The fluid-storage tank according to claim 3, wherein the inflatable bladder is configured to correspond to, or conform to, at least one internal wall of the fluid-storage tank when the inflatable bladder is in an inflated configuration thereof.

5. The fluid-storage tank according to any one of the preceding claims, wherein the fluid-storage tank comprises at least one baffle arranged within the fluid storage volume for reducing fluid slosh within the fluid-storage tank.

6. The fluid-storage tank according to claim 5 when dependent on claim 3 or 4, wherein the inflatable bladder is configured such that, in an inflated configuration thereof, the inflatable bladder at least partially occupies a space defined at least in part by the at least one baffle.

7. The fluid-storage tank according to claim 6, wherein the inflatable bladder is configured such that, in an inflated configuration thereof, the inflatable bladder at least partially occupies a space defined at least in part by the at least one baffle and an internal wall of the fluid-storage tank defining the fluid storage volume.

8. The fluid-storage tank according to any preceding claim, wherein the adjustable volume-occupier comprises a plurality of inflatable bladders wherein each of the plurality of inflatable bladders is configured such that, in an inflated configuration thereof, each inflatable bladder at least partially occupies a space defined at least in part by at least one baffle of the plurality of baffles.

9. The fluid-storage tank according to any preceding claim, wherein the fluid-storage tank comprises a plurality of baffles arranged within the fluid storage volume for reducing fluid slosh within the fluid-storage tank, the plurality of baffles defining at least one pair of opposed baffles, each pair of opposed baffles defining a respective inter-baffle space.

10. The fluid-storage tank according to claim 9 when dependent on claim 3, wherein the inflatable bladder is configured such that, in an inflated configuration thereof, the inflatable bladder at least partially occupies at least one inter-baffle space.

11. The fluid-storage tank according to claim 9 when dependent on claim 8, wherein the plurality of inflatable bladders is configured such that, in an inflated configuration thereof, each bladder of the plurality of inflatable bladders at least partially occupies at least one respective inter-baffle space.

12. The fluid-storage tank according to any preceding claim, comprising a controller configured to adjustably vary the fluid storage volume adjuster according to an operating condition of the tank.

13. A vehicle comprising the fluid-storage tank of any preceding claim.

14. A vehicle comprising the fluid-storage tank according to any one of Claims 3 to 13, wherein the inflatable bladder comprises a fluid inlet for inflating the inflatable bladder and wherein the fluid inlet is configured to be in fluid communication with a bleed-air source or with a ram-air intake of the vehicle.

15. A method of adjustably varying the fluid storage volume of a fluid-storage tank, the method comprising:
adjustably varying the fluid storage volume of the fluid-storage tank according to an operating condition of the fluid-storage tank.
